# EUROPÄISCHE PATENTSCHRIFT

(11) **EP 4 163 164 B1**
(45) Veröffentlichungstag und Bekanntmachung des Hinweises auf die Patenterteilung: **17.01.2024**
(21) Anmeldenummer: 22199946.9
(22) Anmeldetag: 06.10.2022
(51) Int. Cl.: B60T 1/10, B60T 5/00, B60T 13/58, F16D 61/00, F16D 65/78

(54) **KÜHLEINRICHTUNG FÜR EINE BREMSE EINES FAHRZEUGS**
COOLING DEVICE FOR A BRAKE OF A VEHICLE
DISPOSITIF DE REFROIDISSEMENT POUR UN FREIN DE VÉHICULE

(30) Priorität: 07.10.2021 DE 102021126001
(43) Veröffentlichungstag der Anmeldung: 12.04.2023
(73) Patentinhaber: FAUN Umwelttechnik GmbH & Co. KG, 27711 Osterholz-Scharmbeck (DE)
(72) Erfinder: Sandkühler, Georg, 27711 Osterholz-Scharmbeck (DE); Börger, Leif, 27616 Beverstedt (DE)
(74) Vertreter: Regler, Markus Egid

(56) Entgegenhaltungen:
- WO-A1-2021/171213
- WO-A1-2022/105970
- DE-A1-102013 013 258
- DE-A1-102020 004 797

## Beschreibung

Die Erfindung betrifft eine Kühleinrichtung für die Bremse eines elektromotorischen Fahrzeugs.

Aus dem Stand der Technik sind eine Vielzahl von Möglichkeiten bekannt, um insbesondere Nutzfahrzeuge mittels einer Dauerbremse bei Bergabfahrten abzubremsen, wie in der DE 10 2013 013 258 A1 dargestellt ist. Nach gesetzgeberischen Vorgaben muss dabei die gesamte Bremsleistung über einen Zeitraum von zwölf Minuten übernommen werden. Weitverbreitet wird bei Bergabfahrten bei elektrisch getriebenen Fahrzeugen die Batterie mittels Rekuperation geladen, wobei der Elektromotor als Generator wirkt. Bei vollgeladener Batterie muss die überschüssige elektrische Energie jedoch abgebaut werden. Diese wird über einen Bremswiderstand in Wärme umgewandelt, wie es auch in der DE 10 2020 004 797 A1 beschrieben. Dabei ist jedoch eine ist eine aufwändige Kühlung mit Kühlleitungen, Kühlflächen und dergleichen notwendig, was Gewicht mit sich bringt und Bauraum beansprucht.

Es ist also die Aufgabe der Erfindung, eine leichte, kompakte und verschleißfreie Kühleinrichtung für die Bremse eines elektromotorischen Fahrzeugs zur Verfügung zu stellen.

Diese Aufgabe wird gelöst mit einer Kühleinrichtung mit den Merkmalen des Anspruchs 1. Besondere Ausgestaltungen der Erfindung sind Gegenstand der abhängigen Ansprüche 2 bis 14.

Die Erfindung betrifft eine Kühleinrichtung für die Bremse eines elektromotorisch betriebenen Fahrzeugs, insbesondere Nutzfahrzeugs, mit zumindest einem Verdampfungsgefäß aus einem wärmeleitenden Material, zumindest einem Heizelement, das dazu eingerichtet ist, die von dem Elektromotor erzeugte elektrische Energie in Wärme umzuwandeln, so dass ein in dem Verdampfungsgefäß enthaltenes Fluid durch den Wärmeeintrag verdampft wird, sowie zumindest einer fluidleitend mit dem Verdampfungsgefäß verbundenen Ableitung, die dazu eingerichtet ist, das verdampfte Fluid an die Umgebung abzugeben.

Der Elektromotor wirkt als Generator, indem er die Bewegungsenergie des Fahrzeugs in elektrische Energie umwandelt und damit als Bremse wirkt. Die vom Elektromotor erzeugte überschüssige elektrische Energie wird abgeführt, indem sie in dem Heizelement in Wärme umgesetzt wird. Der erfinderische Gedanke liegt darin, die Verdampfungsenthalpie des Fluids zu nutzen, um die in dem Heizelement in Wärme umgesetzte elektrische Energie abzuführen. Die Wärme wird in das Fluid eingebracht, das dabei verdampft. Um den dabei entstehenden Druck zu entkräften, wird der Dampf über die Ableitungen an die Umgebung abgegeben.

Dabei muss das Fluid nicht ausschließlich in dem Verdampfungsgefäß vorliegen, auch in den Ableitungen kann sich Fluid befinden, um ein größeres Fluidvolumen vorhalten zu können.

Das Verdampfungsgefäß besteht aus einem wärmeleitfähigen Material, etwa einem metallischen Material. Auch die Ableitung kann aus einem solchen Material bestehen. Dies beinhaltet den zusätzlichen Vorteil, dass ein Teil der eingebrachten Wärme auch über Wärmeleitung abgeführt werden kann.

Weiterhin kann das Verdampfungsgefäß Sicken und/oder Finnen aufweisen. Dies hat den Vorteil, dass das Verdampfungsgefäß versteift wird und dadurch stabiler ist. Ebenso wird durch die Vergrößerung der Oberfläche die Wärmeableitung verbessert. Durch die Sicken kann das Verdampfungsgefäß auch an den zur Verfügung stehenden Bauraum angepasst werden.

Die Ableitung kann aus einem metallischen oder Kunststoffmaterial bestehen sowie rohrförmig oder als Profil oder als flexible Leitung ausgeführt sein.

Wenn mehr als ein Heizelement zum Einsatz kommen, ist es zweckmäßig, diese gleichmäßig über das Volumen des Verdampfungsgefäßes zu verteilen, um eine gleichmäßige Wärmeeintragung sicherzustellen. Dies ist auch vorteilhaft hinsichtlich der Lebensdauer des Gefäßes.

Die einzelnen Komponenten der Kühleinrichtung können an den vorhandenen Bauraum angepasst werden. Pumpen, Gebläse und aufwändig geführte Kühlleitungen entfallen. Auch dies spart Bauraum, Gewicht und Kosten.

Ein weiterer Vorteil der erfindungsgemäßen Kühleinrichtung besteht darin, dass sie verschleißfrei arbeitet, da keine beweglichen Teile vorhanden sind.

Bevorzugt handelt es sich bei dem Heizelement um eine Heizmanschette oder einen Heizstab.

Eine Heizmanschette kann vollflächig an dem Verdampfungsgefäß anliegen oder dieses umfassen, so dass die daran nach dem Prinzip der Widerstandsheizung entstehende Wärme über eine größere Fläche und damit gleichmäßiger in das Verdampfungsgefäß eingebracht werden kann. Vorteilhaft ist hier die einfache Verschaltung. Außerdem sind Heizmanschetten in jeglicher Form und Größe verfügbar, so dass sie einfach an die Ausgestaltung des Verdampfungsgefäßes angepasst werden können. Insbesondere in der Ausführung als Heizmanschette ist es vorteilhaft, wenn die Heizelemente elektrisch in Reihe geschaltet werden.

Heizstäbe werden vorzugsweise im Inneren des Verdampfungsgefäßes angeordnet, so dass die dort entstehende Wärme unmittelbar an das Fluid abgegeben wird. Insbesondere in der Ausführung als Heizstab ist es vorteilhaft, wenn die Heizelemente elektrisch parallel geschaltet werden.

Kommen mehrere Verdampfungsgefäße zum Einsatz, sind auch komplexere Schaltungen zweckmäßig.

In einer weiteren Ausführung der Erfindung ist vorgesehen, dass das Fluid Wasser und/oder Wassernebel ist. Wasser ist als Fluid ein kostengünstiges und stets verfügbares Material. Wassernebel hat den Vorteil, dass die Verdampfung wegen des günstigeren Verhältnisses von Oberfläche zu Volumen effizienter erfolgt. Demgegenüber kann in Form von flüssigem Wasser - hier im Gegensatz zum nebelförmigen Wasser zu lesen - eine größere Menge zur Verfügung gestellt werden, so dass pro Volumen des Verdampfungsgefäßes mehr Energie umgesetzt werden kann. Möglich ist auch eine Mischform, nämlich dass ein Teil des Volumens des Verdampfungsgefäßes mit flüssigem Wasser gefüllt ist und der übrige Teil des Volumens von Wassernebel eingenommen wird.

In einer Weiterbildung der Erfindung ist vorgesehen, die Kühleinrichtung fluidleitend mit dem Auslass zumindest einer Brennstoffzelle verbunden ist, so dass das Prozesswasser der Brennstoffzelle in die Kühleinrichtung leitbar ist.

In einer Wasserstoff-Brennstoffzelle wird durch Oxidation von Wasserstoff mit Sauerstoff elektrischer Strom erzeugt. Das dabei entstehende Wasser muss abgeführt werden. Üblicherweise wird es an die Umgebung abgegeben. Vorteilhafterweise wird es aber im Rahmen der Erfindung genutzt, um die Versorgung der Kühleinrichtung mit Wasser sicherzustellen. Dies kann beispielsweise über eine einfache Schlauchleitung erfolgen. Dadurch werden Ressourcen optimal genutzt und eine manuelle Befüllung, die zusätzlich selbstverständlich immer möglich ist, ist nur bei hohem Wasserverbrauch notwendig. Außerdem kann die Kühleinrichtung dadurch kompakt gehalten werden, da keine zusätzlichen Vorratsvolumina für Wasser vorgehalten werden müssen.

In einer vorteilhaften Ausbildung der Erfindung ist Wassernebel in das Verdampfungsgefäß und/oder die Ableitung einsprühbar. Dies kann beispielsweise durch ein in der Wand von Verdampfungsgefäß und/oder Ableitung angeordnetes Ventil bewerkstelligt werden, so dass Wassernebel unkompliziert erzeugt werden kann. Es ist auch möglich, den Wassernebel nur bei Bedarf zu erzeugen. Bei akuter Spitzenbelastung kann die Verdampfung von größeren Wasservolumina zu träge vonstattengehen, so dass mittels eingesprühten Nebels kurzzeitig eine größere Wärmemenge schnell abgeführt werden kann.

Es ist auch denkbar, ausschließlich Wassernebel einzusprühen und zu verdampfen. Dann wird auch in dem Verdampfungsgefäß enthaltene Luft erwärmt und die Wärme auch über Konvektion abgeführt.

Weiterhin bevorzugt ist zumindest eine Einfüllvorrichtung vorgesehen, um Verdampfungsgefäß und/oder Ableitung mit Fluid zu befüllen. Dabei kann es sich beispielsweise um einen Kugelhahn oder eine Schlauchkupplung handeln. Die Einfüllvorrichtung kann mit dem Auslass einer Brennstoffzelle verbunden sein, aber auch völlig unabhängig davon der manuellen Befüllung mit Fluid dienen. Damit ist eine Grundversorgung des Kühlsystems mit Verdampfungsfluid vorgesehen, auch unabhängig vom vorstehend genannten. Bei einer hohen zu erbringenden Bremsleistung, etwa bei dauerhaften Bergfahrten, kann das System jederzeit mit neuem Fluid befüllt werden.

Bevorzugt ist auch ein Überlauf vorgesehen. Dieser sorgt dafür, dass nur eine begrenzte Menge an Fluid im Fahrzeug mitgeführt wird, die ausreichend ist, um die gesetzlich vorgesehene Bremsleistung zu ermöglichen und für die meisten Anforderungen des täglichen Betriebs des Fahrzeugs.

Insbesondere wenn ein steter Zufluss von Wasser aus der Brennstoffzelle vorhanden ist, ist ein Überlauf sinnvoll, um ein zu hohes Gewicht durch unnötig mitgeführtes Wasser zu vermeiden.

Weiterhin ist in einer vorteilhaften Ausgestaltung der Erfindung eine Füllstandsüberwachung vorgesehen. Damit kann sichergestellt werden, dass jederzeit eine ausreichende Menge an Verdampfungsfluid mitgeführt wird. Die Füllstandsüberwachung kann auch dazu eingerichtet sein, dem Fahrer des Fahrzeugs ein Unterschreiten eines minimalen Füllstandes anzuzeigen, damit dieser Fluid nachfüllt.

Weiterhin ist in einer Ausgestaltung der Erfindung vorgesehen, dass Verdampfungsgefäß und/oder Ableitung ein Volumen von mindestens 80 Litern aufweisen. Vorzugsweise weisen sie ein Volumen von 80 bis 100 Litern auf. Mit diesem Vorrat an Fluid ist sichergestellt, dass die üblichen Anforderungen für Bremsvorgänge im Betrieb des Fahrzeuges erfüllt werden. Dabei kann der Fluidvorrat sowohl in dem Verdampfungsgefäß als auch in den Ableitungen vorgesehen werden.

Vorzugsweise ist das Verdampfungsgefäß zu jedem Betriebszeitpunkt zumindest teilweise mit Fluid gefüllt. Läuft das Verdampfungsgefäß leer, besteht die Gefahr, dass das oder die Heizelemente durch Überhitzung beschädigt werden, da die daran abfallende Wärme nicht mehr in ausreichendem Maß abgeführt werden kann. Auch das Material des Verdampfungsgefäßes kann dabei in nachteiliger Weise belastet werden.

Weiterhin bevorzugt ist das Verdampfungsgefäß rohrförmig ausgebildet und vorzugsweise horizontal, parallel zum Untergrund am Fahrzeug angeordnet. Ein rohrförmiges Verdampfungsgefäß ist einfach zu fertigen und überaus druckstabil. Bei Bedarf kann ein Rohr auch mit variierendem Durchmesser oder Biegungen bereitgestellt werden, sobald der Bauraum dies erfordert.

In einer anderen vorteilhaften Ausgestaltung der Erfindung ist das Verdampfungsgefäß quaderförmig ausgebildet und vorzugsweise zwischen einer Fahrerkabine und einem Aufbau des Fahrzeugs angeordnet.

Weiterhin kann das Verdampfungsgefäß an Trägern des Fahrzeugchassis oder eines Hilfsrahmens angeordnet sein.

Vorteilhafterweise ist die Ableitung rohrförmig ausgebildet ist und vorzugsweise senkrecht zum Untergrund des Fahrzeugs angeordnet ist. Auch hier gelten die vorstehend aufgeführten Vorteile einer rohrförmigen Gestaltung. Durch eine senkrechte Anordnung der Rohre wird zudem die Abfuhr des erzeugten Fluiddampfes verbessert.

In einer Ausgestaltung der Erfindung kann ein rohrförmiges, horizontal, parallel zum Untergrund des Fahrzeuges angeordnetes Verdampfungsgefäß an seinen Enden mit jeweils einer Ableitung verbunden sein, die ebenfalls rohrförmig ausgebildet und senkrecht zum Untergrund des Fahrzeugs angeordnet ist, so dass das Kühlsystem eine U-Form aufweist.

In einer weiteren Ausgestaltung der Erfindung weist das Verdampfungsgefäß und/oder die Ableitung einen Außendurchmesser von 100 bis 130 Millimetern aufweist. Damit werden der Bauraum und das Gewicht geringgehalten und gleichzeitig ein ausreichendes Volumen für Verdampfungsgefäß und/oder Ableitung ermöglicht.

Weiterhin ist vorgesehen, dass Verdampfungsgefäß und/oder die Ableitung eine Wandstärke von 4 bis 10 Millimetern aufweist. Mit steigender Wandstärke kann mehr Wärme durch das Rohr aufgenommen und auch abgeleitet werden. Gleichzeitig soll die Wandstärke nicht zu groß sein, um einen guten Wärmeübertrag auf das Fluid im Inneren zu ermöglichen. Auch aus Gewichtsgründen ist eine möglichst geringe Wandstärke sinnvoll. Mit den genannten Maßen wird ein guter Kompromiss zwischen diesen beiden Anforderungen und zudem eine hohe Belastungsbeständigkeit erreicht.

Weiterhin bevorzugt ist in einem Innenraum des Verdampfungsgefäßes zumindest ein Schwallblech angeordnet. Dies verhindert, dass das in dem Verdampfungsgefäß befindliche Wasser während der Fahrt schwappt und damit die Fahreigenschaften des Fahrzeugs beeinträchtigt. Die Schwallbleche sind vorzugsweise an einer Innenwand des Verdampfungsgefäßes unverschieblich angeordnet, beispielsweise stoffschlüssig mit der Innenwand verbunden oder aus dieser ausgeformt.

Das erfindungsgemäße Kühlsystem kann in einer Bremse, insbesondere in einer Dauerbremse, eines elektromotorischen Fahrzeugs, insbesondere eines Nutzfahrzeuges, zum Einsatz kommen.

Weitere Merkmale der Erfindungen ergeben sich anhand der Figuren, die nachfolgend beschrieben werden.

Es zeigen:
- Figur 1:: die Einbaulage eines erfindungsgemäßen
- Figur 2:: ein erstes Ausführungsbeispiel der Erfindung
- Figur 3:: ein zweites Ausführungsbeispiel der Erfindung
- Figur 4:: ein drittes Ausführungsbeispiel der Erfindung
- Figur 5:: ein viertes Ausführungsbeispiel der Erfindung.

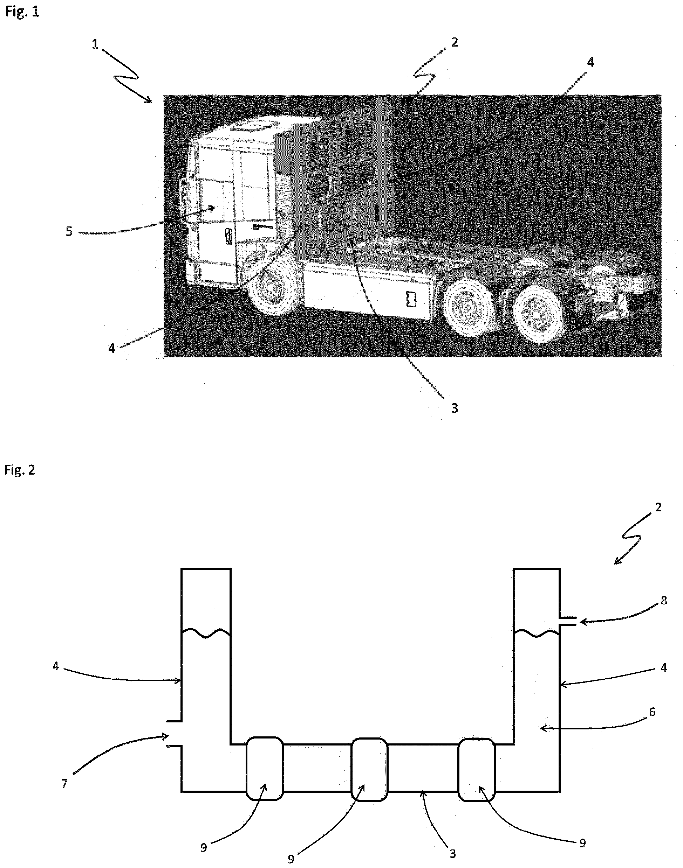

Für ein Nutzfahrzeug 1 wie in Figur 1 gezeigt, das auch als Zugfahrzeug eingesetzt wird, ist eine Dauerbremse gefordert, die bestimmte technische Rahmenbedingungen zu erfüllen hat. Sie muss so ausgelegt sein, dass sie die gesamte Bremsleistung von etwa 250 KW für eine Dauer von zwölf Minuten übernehmen kann. Das Nutzfahrzeug 1 ist elektromotorisch angetrieben und üblicherweise wird zum Bremsen der Elektromotor als Generator eingesetzt und die Bewegungsenergie des Fahrzeugs 1 in elektrische Energie umgesetzt. Diese kann wieder in die Batterie des Fahrzeugs 1 eingespeist werden. Ist dies allerdings vollgeladen, muss die überschüssige Energie dennoch verbraucht werden.

Erfindungsgemäß wird die elektrische Energie über ein Heizelement in Wärme umgesetzt und die Wärme in ein Fluid eingebracht. Das Fluid verdampft unter Nutzung der Wärme und wird an die Umgebung abgegeben.

Dieses Prinzip wird in einer Kühleinrichtung 2 umgesetzt, die ein Verdampfungsgefäß 3 aufweist, in dem das Fluid enthalten ist, sowie zumindest eine Ableitung 4, die dazu eingerichtet ist, das verdampfte Fluid an die Umgebung abzugeben.

In Figur 1 ist lediglich der für eine erfindungsgemäße Kühleinrichtung 2 vorgesehene Bauraum dargestellt. Dessen einzelne Abschnitte entsprechen also nicht unmittelbar den Komponenten der Kühleinrichtung 2. Im Sinne der leichteren Verständlichkeit werden nachfolgend dennoch die Bezugszeichen für die einzelnen Merkmale der Erfindung genutzt, um deren Einbaulage verdeutlichen zu können.

In diesem Ausführungsbeispiel ist das Verdampfungsgefäß 3 rohrförmig ausgebildet und horizontal, parallel zum Untergrund am Nutzfahrzeug 1 angeordnet ist. An den Enden des Verdampfungsgefäßes 3 ist jeweils eine Ableitung 4 angeordnet, die ebenfalls rohrförmig ausgebildet ist, aber senkrecht zum Untergrund des Fahrzeugs 1 angeordnet ist. Zusammen ergibt das eine U-förmige Anordnung, die sich bauraumsparend zwischen Fahrerkabine 5 und dem (hier nicht dargestellten) Aufbau des Nutzfahrzeuges 1 einbauen lässt. Verdampfungsgefäß 3 und Ableitungen 4 sind aus einem metallischen Material gefertigt.

In dem ersten schematisch dargestellten Ausführungsbeispiel in Figur 2 sind das Verdampfungsgefäß 3 und die Ableitungen 4 des Kühlsystems 2 vollständig beziehungsweise teilweise mit Wasser 6 gefüllt. Verdampfungsgefäß 3 und Ableitungen 4 sind dazu ausgelegt mindestens 80 Liter Wasser aufzunehmen. Dies ist ausreichend, um den üblichen Betrieb einer Dauerbremse sicherzustellen und gleichzeitig nicht zu viel unnötiges Gewicht in Form von Wasser 6 mitzuführen.

Über eine Einfüllvorrichtung 7 wird der Kühleinrichtung 2 Wasser 6 zugeführt. Die Einfüllvorrichtung 7 ist mit dem Auslass einer oder mehrerer nicht näher dargestellten Brennstoffzelle verbunden, die die elektrische Energie für den Elektromotor im normalen Fahrbetrieb zur Verfügung stellt. Das dabei durch die Oxidation von Wasserstoff entstehende Prozesswasser wird in die Kühleinrichtung 2 geleitet und dort als Fluid genutzt. Im täglichen Betrieb werden bis zu 150 Liter Wasser 6 in den Brennstoffzellen des Nutzfahrzeugs erzeugt, das ansonsten ungenutzt an die Umgebung abgegeben werden würde. So kann das Wasser 6 ressourcenschonend eingesetzt werden.

Damit die Kühleinrichtung 2 nicht zu viel Wasser 6 aufnimmt, ist ein Überlauf 8 vorgesehen, der das bevorratete Volumen automatisch begrenzt.

Damit aber auch ein bestimmter Mindestfüllstand nicht unterschritten wird, ist auch eine Füllstandsüberwachung vorgesehen, mit deren Hilfe der Fahrer zum manuellen Nachfüllen von Wasser 6 aufgefordert wird, wenn im Betrieb der Wasserverbrauch ungewöhnlich hoch ist.

In diesem Ausführungsbeispiel sind drei Heizmanschetten 9 vorgesehen, die entlang des Verdampfungsgefäßes 3 verteilt und vollflächig mit diesem in Anlage sind. Sie weisen eine Leistung von 85 Kilowatt und einen Widerstand von 3,6 Ohm auf. Die Heizmanschetten 9 sind elektrisch mit dem Elektromotor verbunden. Die dort erzeugte elektrische Energie wird in den Heizmanschetten 9 in Wärme umgewandelt und auf die Wand des Verdampfungsgefäßes 3 und das darin befindliche Wasser 6 übertragen. Das Wasser 6 nimmt die Wärme auf und geht in seinen gasförmigen Zustand über, in dem die Wärme als latente Wärme gespeichert ist. Das verdampfte Wasser 6 wird durch die Ableitungen 4 nach oben abgeführt und kann durch das offene Ende der Ableitungen 4 in die Umgebung entweichen.

Verdampfungsgefäß 3 und Ableitungen 4 sind aus einem metallischen, gut wärmeleitenden Material gefertigt. Dies führt dazu, dass die Wärme einerseits sehr effizient auf das Wasser 6 im Inneren des Verdampfungsgefäßes übertragen werden kann und andererseits über die Ableitungen 4 auch auf dem Wege der Wärmeleitung abgeführt werden kann.

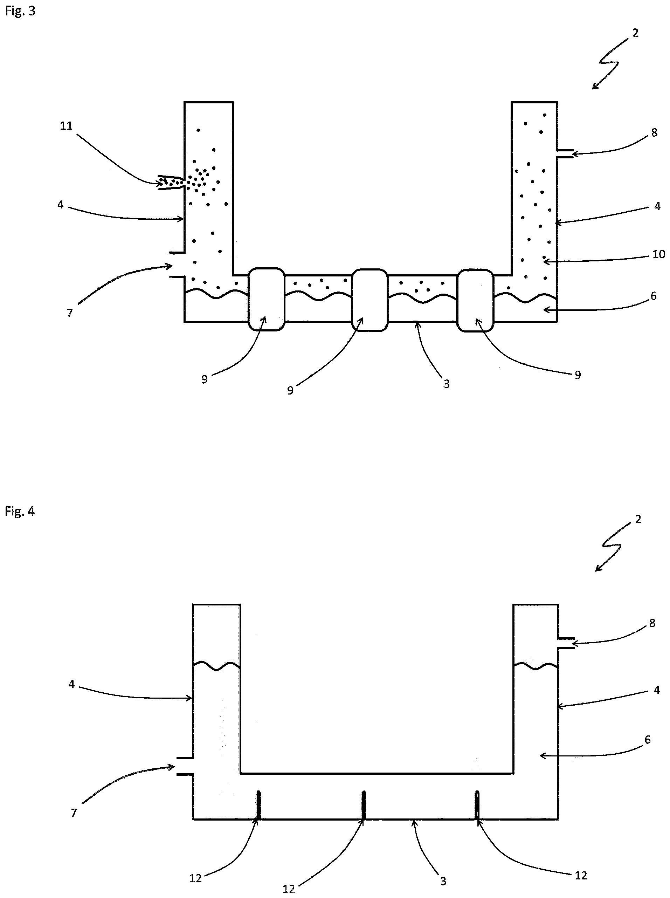

Das zweite Ausführungsbeispiel (Figur 3) unterscheidet sich von dem ersten darin, dass ein Teil des Innenvolumens der Kühleinrichtung 2 von Wassernebel 10 eingenommen wird, der durch ein Einsprühventil 11 in die Kühleinrichtung 2 eingebracht wird. Die kleinen Tröpfchen des Wassernebels 10 haben relativ zu ihrem Volumen betrachtet eine sehr große Oberfläche. Damit kann das Wasser 6 sehr schnell Wärme aufnehmen. Dafür steht eine nicht so große Gesamtmenge an Wasser 6 zur Verfügung. Einer schnellen Wärmeabfuhr steht also eine geringere Wärmekapazität gegenüber. Dennoch bietet sich die Verwendung von Wassernebel 10 an, wenn schnell große Wärmemengen, etwa bei einer gelegentlich auftretenden starken Bremsbelastung, abgeführt werden müssen.

Auch das Einsprühventil 11 kann vorteilhafterweise fluidleitend mit der Brennstoffzelle in Verbindung stehen, so dass das dort erzeugte Prozesswasser verwendet werden kann.

Ein weiteres Ausführungsbeispiel ist in Figur 4 gezeigt. Die dort dargestellte Kühleinrichtung 2 entspricht weitgehend dem ersten Ausführungsbeispiel aus Figur 2. Der Unterschied besteht darin, dass an Stelle der Heizmanschetten 9 Heizstäbe 12 eingesetzt werden. Diese bieten den Vorteil, dass die dort erzeugte Wärme unmittelbar an das Wasser 6 abgegeben werden kann.

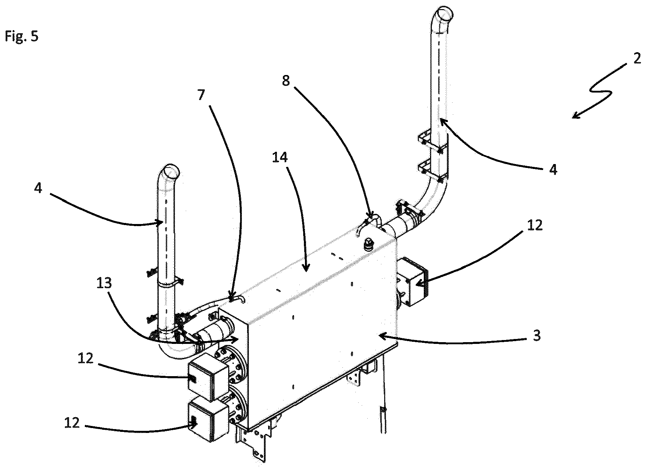

Ein viertes Ausführungsbeispiel ist in Figur 5 gezeigt. Die Kühleinrichtung 2 verfügt über ein quaderförmiges oder kastenförmiges Verdampfungsgefäß 3. Diese Ausgestaltung ist im Zwischenraum von Fahrerkabine und Aufbau eines Fahrzeuges, insbesondere Nutzfahrzeuges, angeordnet. Drei Heizstäbe 12 sind in Seitenwänden 13 des Verdampfungsgefäßes 3 eingebaut und ragen in dessen Innenraum hinein.

Das grundlegende Funktionsprinzip ist identisch mit der in Figur 4 gezeigten Ausführungsform. Im Gegensatz dazu sind die Einfüllvorrichtung 7 und der Überlauf 8 an der oberen Wand 14 des Verdampfungsgefäßes 3 angeordnet.

Je nach Füllgrad des Verdampfungsgefäßes 3 kann es bei unruhiger Fahrt zu einem Schwappen des Wassers in dem Verdampfungsgefäß 3 kommen. Das kann die Fahreigenschaften des Fahrzeuges negativ beeinflussen. Um dies zu verhindern sind in dem Innenraum des Verdampfungsgefäßes 3 an dessen unterer Wand hier nicht näher dargestellte Schwallbleche vorgesehen.

### Bezugszeichen

- 1: Nutzfahrzeug
- 2: Kühleinrichtung
- 3: Verdampfungsgefäß
- 4: Ableitung
- 5: Fahrerkabine
- 6: Wasser
- 7: Einfüllvorrichtung
- 8: Überlauf
- 9: Heizmanschette
- 10: Wassernebel
- 11: Einsprühventil
- 12: Heizstab
- 13: Seitenwand von 3
- 14: obere Wand von 3

## Patentansprüche

1. Kühleinrichtung (2) für die Bremse eines elektromotorisch betriebenen Fahrzeugs (1), insbesondere Nutzfahrzeugs (1), mit zumindest einem Verdampfungsgefäß (3) aus einem wärmeleitenden Material, zumindest einem Heizelement, das dazu eingerichtet ist, die von dem Elektromotor erzeugte elektrische Energie in Wärme umzuwandeln, so dass ein in dem Verdampfungsgefäß (3) enthaltenes Fluid durch den Wärmeeintrag verdampft wird, sowie zumindest einer fluidleitend mit dem Verdampfungsgefäß (3) verbundenen Ableitung (4), die dazu eingerichtet ist, das verdampfte Fluid an die Umgebung abzugeben.

2. Kühleinrichtung (2) nach Anspruch 1, wobei das Heizelement eine Heizmanschette (9) oder ein Heizstab (12) ist.

3. Kühleinrichtung (2) nach Anspruch 1 oder 2, wobei das Fluid Wasser (6) und/oder Wassernebel 10) ist.

4. Kühleinrichtung (2) nach Anspruch 3, wobei die Kühleinrichtung (2) fluidleitend mit dem Auslass zumindest einer Brennstoffzelle verbunden ist, so dass das Prozesswasser der Brennstoffzelle in die Kühleinrichtung (2) leitbar ist.

5. Kühleinrichtung (2) nach Anspruch 3 oder 4, wobei Wassernebel (10) in das Verdampfungsgefäß (3) und/oder die Ableitung (4) einsprühbar ist.

6. Kühleinrichtung (2) nach zumindest einem der vorstehenden Ansprüche, wobei ein Überlauf (8) vorgesehen ist.

7. Kühleinrichtung (2) nach zumindest einem der vorstehenden Ansprüche, wobei eine Füllstandsüberwachung vorgesehen ist.

8. Kühleinrichtung (2) nach zumindest einem der vorstehenden Ansprüche, wobei das Verdampfungsgefäß (3) und/oder die Ableitung (4) ein Volumen von mindestens 80 Litern aufweisen.

9. Kühleinrichtung (2) nach zumindest einem der vorstehenden Ansprüche, wobei das Verdampfungsgefäß (3) zu jedem Betriebszeitpunkt zumindest teilweise mit Fluid gefüllt ist.

10. Kühleinrichtung (2) nach zumindest einem der vorstehenden Ansprüche, wobei das Verdampfungsgefäß (3) rohrförmig ausgebildet und vorzugsweise horizontal, parallel zum Untergrund am Fahrzeug angeordnet ist.

11. Kühleinrichtung (2) nach zumindest einem der Ansprüche 1 bis 9, wobei das Verdampfungsgefäß (3) quaderförmig ausgebildet ist und vorzugsweise zwischen einer Fahrerkabine und einem Aufbau des Fahrzeugs angeordnet ist.

12. Kühleinrichtung (2) nach zumindest einem der vorstehenden Ansprüche, wobei die Ableitung (4) rohrförmig ausgebildet ist und vorzugsweise senkrecht zum Untergrund des Fahrzeugs angeordnet ist.

13. Kühleinrichtung (2) nach zumindest einem der vorstehenden Ansprüche, wobei das Verdampfungsgefäß (3) und/oder die Ableitung (4) einen Außendurchmesser von 100 bis 130 Millimetern aufweist.

14. Kühleinrichtung (2) nach zumindest einem der vorstehenden Ansprüche, wobei das Verdampfungsgefäß (3) und/oder die Ableitung (4) eine Wandstärke von 4 bis 10 Millimetern aufweist.

15. Kühleinrichtung (2) nach zumindest einem der vorstehenden Ansprüche, wobei in einem Innenraum des Verdampfungsgefäßes (3) zumindest ein Schwallblech angeordnet ist.

## Claims

1. Cooling device (2) for the brake of an electric-motor-operated vehicle (1), in particular a utility vehicle (1), having at least one evaporation vessel (3) made of a heat-conducting material, at least one heating element which is designed to convert the electrical energy generated by the electric motor into heat, such that a fluid contained in the evaporation vessel (3) is evaporated by the heat input, and at least one discharge line (4) which is fluidically connected to the evaporation vessel (3) and is designed to discharge the evaporated fluid to the environment.

2. Cooling device (2) according to claim 1, wherein the heating element is a heating sleeve (9) or a heating rod (12).

3. Cooling device (2) according to claim 1 or 2, wherein the fluid is water (6) and/or water mist (10).

4. Cooling device (2) according to claim 3, wherein the cooling device (2) is fluidically connected to the outlet of at least one fuel cell, such that the process water of the fuel cell can be conducted into the cooling device (2).

5. Cooling device (2) according to claim 3 or 4, wherein water mist (10) can be sprayed into the evaporation vessel (3) and/or the discharge line (4).

6. Cooling device (2) according to at least one of the preceding claims, wherein an overflow (8) is provided.

7. Cooling device (2) according to at least one of the preceding claims, wherein fill level monitoring is provided.

8. Cooling device (2) according to at least one of the preceding claims, wherein the evaporation vessel (3) and/or the discharge line (4) have a volume of at least 80 liters.

9. Cooling device (2) according to at least one of the preceding claims, wherein the evaporation vessel (3) is at least partially filled with fluid at any operating time.

10. Cooling device (2) according to at least one of the preceding claims, wherein the evaporation vessel (3) is tubular and is preferably arranged horizontally, in parallel with the subsurface, on the vehicle.

11. Cooling device (2) according to at least one of claims 1 to 9, wherein the evaporation vessel (3) is cuboid and is preferably arranged between a driver's cab and a body of the vehicle.

12. Cooling device (2) according to at least one of the preceding claims, wherein the discharge line (4) is tubular and is preferably arranged perpendicularly to the subsurface of the vehicle.

13. Cooling device (2) according to at least one of the preceding claims, wherein the evaporation vessel (3) and/or the discharge line (4) has an outer diameter of from 100 to 130 millimeters.

14. Cooling device (2) according to at least one of the preceding claims, wherein the evaporation vessel (3) and/or the discharge line (4) has a wall thickness of from 4 to 10 millimeters.

15. Cooling device (2) according to at least one of the preceding claims, wherein at least one baffle is arranged in an interior of the evaporation vessel (3).

## Revendications

1. Dispositif de refroidissement (2) pour le frein d'un véhicule (1) fonctionnant avec un moteur électrique, en particulier un véhicule utilitaire (1), comportant au moins un récipient d'évaporation (3) en un matériau thermoconducteur, au moins un élément chauffant qui est conçu pour convertir l'énergie électrique générée par le moteur électrique en chaleur, de sorte qu'un fluide contenu dans le récipient d'évaporation (3) est évaporé par l'apport de chaleur, et au moins une dérivation (4) reliée au récipient d'évaporation (3) d'une manière conductrice de fluide, laquelle dérivation est conçue pour envoyer le fluide évaporé dans l'environnement.

2. Dispositif de refroidissement (2) selon la revendication 1, dans lequel l'élément chauffant est un manchon chauffant (9) ou un thermoplongeur (12).

3. Dispositif de refroidissement (2) selon la revendication 1 ou 2, dans lequel le fluide est de l'eau (6) et/ou un brouillard d'eau (10).

4. Dispositif de refroidissement (2) selon la revendication 3, dans lequel le dispositif de refroidissement (2) est relié à la sortie d'au moins une pile à combustible d'une manière conductrice de fluide, de sorte que l'eau de traitement de la pile à combustible peut être conduite dans le dispositif de refroidissement (2).

5. Dispositif de refroidissement (2) selon la revendication 3 ou 4, dans lequel le brouillard d'eau (10) peut être vaporisé dans le récipient d'évaporation (3) et/ou la dérivation (4).

6. Dispositif de refroidissement (2) selon au moins l'une des revendications précédentes, dans lequel un trop-plein (8) est prévu.

7. Dispositif de refroidissement (2) selon au moins l'une des revendications précédentes, dans lequel un appareil de surveillance de niveau de remplissage est prévu.

8. Dispositif de refroidissement (2) selon au moins l'une des revendications précédentes, dans lequel le récipient d'évaporation (3) et/ou la dérivation (4) présentent un volume d'au moins 80 litres.

9. Dispositif de refroidissement (2) selon au moins l'une des revendications précédentes, dans lequel le récipient d'évaporation (3) est rempli au moins partiellement de fluide à chaque instant de fonctionnement.

10. Dispositif de refroidissement (2) selon au moins l'une des revendications précédentes, dans lequel le récipient d'évaporation (3) est de forme tubulaire et est disposé de préférence horizontalement, parallèlement au sol sur le véhicule.

11. Dispositif de refroidissement (2) selon au moins l'une des revendications 1 à 9, dans lequel le récipient d'évaporation (3) est de forme parallélépipédique et est disposé de préférence entre une cabine de conduite et une carrosserie du véhicule.

12. Dispositif de refroidissement (2) selon au moins l'une des revendications précédentes, dans lequel la dérivation (4) est de forme tubulaire et est disposée de préférence perpendiculairement au sol du véhicule.

13. Dispositif de refroidissement (2) selon au moins l'une des revendications précédentes, dans lequel le récipient d'évaporation (3) et/ou la dérivation (4) présentent un diamètre extérieur de 100 à 130 millimètres.

14. Dispositif de refroidissement (2) selon au moins l'une des revendications précédentes, dans lequel le récipient d'évaporation (3) et/ou la dérivation (4) présentent une épaisseur de paroi de 4 à 10 millimètres.

15. Dispositif de refroidissement (2) selon au moins l'une des revendications précédentes, dans lequel au moins un déflecteur est disposé dans l'espace intérieur du récipient d'évaporation (3).
